# EUROPÄISCHE PATENTSCHRIFT

(11) **EP 0 705 655 B1**
(45) Veröffentlichungstag und Bekanntmachung des Hinweises auf die Patenterteilung: **01.10.1997**
(21) Anmeldenummer: 95113443.6
(22) Anmeldetag: 26.08.1995
(51) Int. Cl.: B23D 45/02, B21D 5/02, B21D 43/10, B21C 37/16, B23Q 3/06, B23D 21/04, B23K 26/08, B23B 5/16, B23B 3/16, B23G 1/22

(54) **Bearbeitungsmaschine mit relativverschiebbaren Drehvorrichtungen**
Work machine with relative movable rotating devices
Machine comportant des dispositifs de rotation pouvant coulisser relativement l'un par rapport à l'autre

(30) Priorität: 03.09.1994 DE 9414501 U
(43) Veröffentlichungstag der Anmeldung: 10.04.1996
(73) Patentinhaber: Trumpf GmbH & Co, D-71254 Ditzingen (DE)
(72) Erfinder: Klingel, Hans,, D-71696 Möglingen (DE); Häfele, Karl-Eberhard, D-73079 Süssen (DE)
(74) Vertreter: KOHLER SCHMID + PARTNER

(56) Entgegenhaltungen:
- EP-A- 0 260 692
- EP-A- 0 432 857
- DE-A- 3 515 759
- US-A- 4 655 109
- US-A- 4 949 443
- US-A- 5 376 061

## Beschreibung

Die Erfindung betrifft eine Bearbeitungsmaschine, insbesondere eine Laserbearbeitungsmaschine, zum Bearbeiten von länglichen Werkstücken, vorzugsweise von Profilstäben, mit einem Bearbeitungskopf sowie mit einer gesteuert betätigbaren Drehvorrichtung für das Werkstück, welche wenigstens eine um die Längsachse des Werkstücks gesteuert angetrieben drehbare Einspannhalterung für das Werkstück aufweist.

Mittels derartiger Maschinen lassen sich Werkstücke, beispielsweise Hohlprofile, in vielfältiger Weise bearbeiten. So werden etwa mit einem Laserschneidkopf bestückte Maschinen dazu verwendet, Profilstäbe abzulängen oder an den Wandungen der Hohlprofile Ausschnitte mit unterschiedlichen Konturen herzustellen.

An den bekannten gattungsgemäßen Bearbeitungsmaschinen wird das zu bearbeitende Werkstück mittels der Einspannhalterung einer stationären Drehvorrichtung festgelegt und erforderlichenfalls, um ein Durchbiegen des Werkstückes zu verhindern, mit Abstand von der Drehvorrichtung abgestützt. Anschließend verfährt der Bearbeitungskopf entlang des Werkstückes und bearbeitet dieses in der gewünschten Art und Weise. Aufgrund der Drehbarkeit der Einspannhalterung mit dem daran festgelegten Werkstück ist dessen gesamte Oberfläche in Umfangsrichtung für den Bearbeitungskopf zugänglich. Runde Werkstücke stützen sich auch während ihrer Drehbewegung auf der bzw. auf den mit Abstand von der Drehvorrichtung angeordneten Abstützungen ab.

Nachteiligerweise wird an den bekannten Bearbeitungsmaschinen die in einem Arbeitsgang bearbeitbare Werkstücklänge durch die Länge des Verfahrweges des Bearbeitungskopfs begrenzt. Das Bearbeiten von Werkstücken, deren Länge die Verfahrweglänge des Bearbeitungskopfs übersteigt, erfordert ein aufwendiges Umsetzen des Werkstücks. So müssen etwa lange Profilstäbe nach dem ersten Arbeitsgang, in dem das Profil lediglich bis auf Höhe der Verfahrendstellung des Bearbeitungskopfs bearbeitet werden konnte, mittels Kränen aus der Maschine ausgehoben und gedreht werden, ehe sie mit ihrem noch unbearbeiteten Bereich im Arbeitsbereich des Bearbeitungskopfs an der Maschine festgelegt werden können. Sind Werkstücke mit unrundem, insbesondere mit eckigem Querschnitt, in Umfangsrichtung zu bearbeiten und dabei um ihre Längsachse zu drehen, so ergäbe sich an der Auflagefläche des Werkstücks an der mit Abstand von der Drehvorrichtung angeordneten Abstützung eine ungleichförmige Abwälzbewegung des Werkstücks in Umfangsrichtung.

Infolge der ungleichförmigen Abwälzbewegung könnte das Werkstück, insbesondere bei großer Werkstücklänge, in Schwingungen geraten und Gefahr laufen, von der Abstützung abzurutschen. Außerdem wäre aufgrund der Schwingungen des Werkstücks eine Werkstückbearbeitung während der Drehbewegung nicht möglich.

Der Erfindung liegt nun die Aufgabe zugrunde, eine Bearbeitungsmaschine zu schaffen, die eine automatisierte Bearbeitung von Werkstücken auch relativ großer Längen und unterschiedlicher Querschnittsformen erlaubt.

Diese Aufgabe wird erfindungsgemäß dadurch gelöst, daß an einer Bearbeitungsmaschine der eingangs genannten Art wenigstens eine weitere gesteuert betätigbare Drehvorrichtung für das Werkstück vorgesehen ist und daß die Einspannhalterungen der Drehvorrichtungen unabhängig voneinander betätigbar und die Drehvorrichtungen in Längsrichtung des Werkstücks relativ zueinander angetrieben verschiebbar sind. An einer derartigen Bearbeitungsmaschine kann das zu bearbeitende Werkstück automatisiert abgestützt, in den Arbeitsbereich des Bearbeitungskopfs nachgesetzt und erforderlichenfalls um seine Längsachse gedreht werden. Zur Bearbeitung von Werkstücken großer Längen können die Drehvorrichtungen entlang des Werkstücks relativ zueinander derart positioniert werden, daß eine Durchbiegung des Werkstücks verhindert wird.

Übersteigt die Länge des Werkstücks die Verfahrweglänge des Bearbeitungskopfs in Werkstücklängsrichtung, so kann, nachdem das Werkstück unter Verfahren des Bearbeitungskopfs bis auf Höhe der Verfahrendstellung des Bearbeitungskopfs bearbeitet ist, das Werkstück mit einer noch unbearbeiteten Teillänge in den Arbeitsbereich des Bearbeitungskopfs nachgeschoben bzw. nachgezogen werden. Zu diesem Zweck kann bei Verwendung zweier Drehvorrichtungen eine von diesen in ihrer momentanen Lage verbleiben und ihre Einspannhalterung in die Öffnungsstellung geschaltet werden, in der die Einspannung des Werkstücks gelöst ist. Anschließend wird die zweite Drehvorrichtung mit dem daran eingespannt gehaltenen Werkstück verfahren. Das Werkstück wird dadurch relativ zu der zumindest momentan ortsunveränderlichen Drehvorrichtung verschoben und gelangt mit einer noch unbearbeiteten Teillänge in den Arbeitsbereich des Bearbeitungskopfs. Anschließend wird die Einspannhalterung der ortsfesten Drehvorrichtung betätigt, so daß das zu bearbeitende Werkstück wieder an beiden Drehvorrichtungen festgelegt ist. Der zuvor nach Beendigung des ersten Arbeitsganges in seine Ausgangsstellung zurückverfahrene Bearbeitungskopf kann nun entlang der noch unbearbeiteten Teillänge des Werkstücks verfahren und diese bearbeiten. Eine kontinuierliche Verschiebung von Werkstücken, deren Gesamtlänge den Abstand zweier Drehvorrichtungen in Werkstücklängsrichtung übersteigt, kann mit Hilfe einer Ausführungsform der erfindungsgemäßen Bearbeitungsmaschine realisiert werden, an der, im Falle zweier Drehvorrichtungen, beide Drehvorrichtungen angetrieben verschiebbar sind. Während an der ersten Drehvorrichtung die Einspannhalterung in Öffnungsstellung geschaltet ist, verfährt die zweite Drehvorrichtung mit dem daran eingespannten Werkstück in dessen Längsrichtung. Unmittelbar mit dem Anhalten der zweiten Drehvorrichtung wird die Einspannhalterung der ersten Drehvorrichtung in Einspannstellung geschaltet, und diese Drehvorrichtung wird in der Richtung, in der zuvor die zweite Drehvorrichtung verfahren worden ist, in Bewegung gesetzt.

Zeitgleich mit Beendigung ihrer Verfahrbewegung wird die zweite Drehvorrichtung an ihrer Einspannhalterung in Öffnungsstellung geschaltet, so daß nunmehr die erste Drehvorrichtung das Werkstück relativ zu der zweiten Drehvorrichtung verschiebt. Die zweite Drehvorrichtung kann nun bei geöffneter Einspannhalterung in ihre Ausgangslage zurückverfahren werden. Auf diese Art und Weise ist sichergestellt, daß das Werkstück während seiner gesamten kontinuierlichen Verschiebebewegung stets an einer Drehvorrichtung eingespannt festgelegt und an einer zweiten, nämlich an der in Öffnungsstellung geschalteten Drehvorrichtung, in vertikaler Richtung abgestützt ist. An Bearbeitungsmaschinen, deren Bearbeitungskopf in Längsrichtung des zu bearbeitenden Werkstücks verfahrbar ist, läßt sich die Relativbewegung zwischen Bearbeitungskopf und Werkstück durch entsprechende Abstimmung der Bewegungen des Bearbeitungskopfes sowie des mittels der Drehvorrichtung(en) verschobenen Werkstückes die Relativgeschwindigkeit zwischen dem Bearbeitungskopf und dem Werkstück, also etwa im Falle von Laserschneidmaschinen die Schneidgeschwindigkeit in Längsrichtung des Werkstückes, äußerst feinfühlig steuern bzw. bei gegenläufiger Bewegung von Werkstück und Bearbeitungskopf verdoppeln. Mit Hilfe der gesteuert angetrieben drehbaren Einspannhalterungen kann das zu bearbeitende Werkstück automatisiert um seine Längsachse gedreht werden, so daß der Bearbeitungskopf der Maschiin Umfangsrichtung des Werkstücks in jedem beliebigen Bereich der Werkstückoberfläche angesetzt werden kann. Das Werkstück ist dabei an den Einspannhalterungen der verschiedenen Drehvorrichtungen eingespannt und kann dementsprechend stabil gelagert mit einer gleichförmigen Bewegung in Umfangsrichtung um seine Längsachse gedreht werden. Dies eröffnet die Möglichkeit, das Werkstück in einem kontinuierlichen Arbeitsgang in Umfangsrichtung zu bearbeiten.

Eine bevorzugte Ausführungsform der erfindungsgemäßen Bearbeitungsmaschine mit einer in Längsrichtung des Werkstücks ortsfesten Drehvorrichtung zeichnet sich dadurch aus, daß zwei in Längsrichtung des Werkstücks der ortsfesten Drehvorrichtung beidseits benachbarte und in Längsrichtung des Werkstücks verschiebbare Drehvorrichtungen vorgesehen sind. Die ortsfeste Drehvorrichtung ist dabei vorzugsweise im Nahbereich des Bearbeitungskopfs angeordnet und dient hauptsächlich zur Fixierung des Werkstücks in Bearbeitungsstellung. Die eine der verschiebbaren Drehvorrichtungen ist dem unbearbeiteten Ende des Werkstücks zugeordnet und setzt dieses in der vorstehend beschriebenen Art und Weise in den Arbeitsbereich des Bearbeitungskopfs nach. Die zweite verschiebbare Drehvorrichtung übernimmt das Werkstück, wenn es, mittels des Bearbeitungskopfs bearbeitet, aus der ortsfesten Drehvorrichtung unter der Wirkung der Nachsetzbewegung austritt.

Zweckmäßigerweise ist die verschiebbare Drehvorrichtung bzw. sind die verschiebbaren Drehvorrichtungen erfindungsgemäßer Bearbeitungsmaschinen an jeweils einem mittels eines Zahnstangenantriebs in Längsrichtung des Werkstücks geführt verfahrbaren Tragschlitten angeordnet. Neben der Drehvorrichtung selbst kann beispielsweise auch deren Verfahrantrieb an dem Tragschlitten huckepack gelagert werden.

Vorzugsweise sind die Einspannhalterungen der verschiedenen Drehvorrichtungen wahlweise synchronisiert oder unsynchronisiert drehbar. Synchronisiert werden die Einspannhalterungen gedreht, wenn die Bearbeitung des Werkstücks an einem Umfangsbereich beendet und ein noch unbearbeiteter Bereich dem Bearbeitungskopf zugedreht werden soll. Ein unsynchronisiertes, vorzugsweise gegenläufiges Drehen der Einspannhalterungen ermöglicht es, das an den Einspannhalterungen eingespannte Werkstück vor Aufnahme der Bearbeitung durch den Bearbeitungskopf um die Werkstücklängsachse zu verwinden bzw. bestehende Verwindungen um die Werkstücklängsachse zu richten.

Eine sichere Festlegung des zu bearbeitenden Werkstücks an den Drehvorrichtungen, wie sie insbesondere während der Werkstückbearbeitung gewährleistet sein muß, wird in weiterer vorteilhafter Ausgestaltung der Erfindung dadurch erreicht, daß die Einspannhalterungen jeweils wenigstens zwei, insbesondere jeweils vier, einander vorzugsweise paarweise gegenüberliegende und gegeneinander relativverschiebbare Spannbacken aufweisen.

Zur Vermeidung von Unwuchten beim Drehen der Werkstücke um deren Längsachse müssen die Werkstücke zentriert zwischen den Spannbacken eingespannt werden. Eine derartige zentrische Einspannung des Werkstückes wird in zweckmäßiger Ausgestaltung der Erfindung dadurch sichergestellt, daß die einander zugeordneten Spannbacken synchronisiert verschiebbar sind und daß die Verschiebung der Spannbacken zum zentrischen Einspannen des Werkstückes kraftabhängig gesteuert ist. Aufgrund der kraftabhängigen Steuerung entwickeln die Spannbacken ihre volle Einspannkraft auf das Werkstück erst dann, wenn dessen Längsachse mit dem gedachten Zentrum der Spannbacken zusammenfällt.

Der sicheren Fixierung und Abstützung des Werkstückes insbesondere während des Bearbeitungsvorganges dient es, daß, wie im Falle einer weiteren Ausführungsform der erfindungsgemäßen Bearbeitungsmaschine vorgesehen, an wenigstens einer Drehvorrichtung, vorzugsweise gegebenenfalls an der ortsfesten Drehvorrichtung, wenigstens zwei in Längsrichtung des Werkstückes einander benachbarte, gesteuert betätigbare Einspannhalterungen für das Werkstück vorgesehen sind. Mit Hilfe der beiden einander benachbarten Einspannhalterungen wird eine großflächige Abstützung und/oder Kraftbeaufschlagung des Werkstückes erzielt. Wird die betreffende Drehvorrichtung im Nahbereich des Bearbeitungskopfes angeordnet, so kann eine unerwünschte Bewegung bzw. Durchbiegung des zu bearbeitenden Werkstücks während des Bearbeitungsvorgangs wirksam verhindert werden.

An einer weiteren bevorzugten Ausführungsform von erfindungsgemäßen Bearbeitungsmaschinen zur Bearbeitung insbesondere von hohlprofilierten Werkstücken mit einer Absaugvorrichtung ist vorgesehen, daß an dem dem bearbeitungsseitigen Ende abgewandten unbearbeiteten Ende des Werkstückes eine verschiebbare Drehvorrichtung mit der mit dieser verschiebbaren und das unbearbeitete Ende des Werkstückes absaugenden Absaugvorrichtung vorgesehen ist. Dabei kann die Absaugvorrichtung gegebenenfalls an dem die Drehvorrichtung lagernden Tragschlitten angebracht sein. In Anwendungsfällen, in denen als Werkstücke Hohlprofile zu bearbeiten sind, wird dadurch, daß die Absaugvorrichtung das unbearbeitete Werkstückende absaugt, in dessen Umgebung die Werkstückwandung noch unversehrt ist, das Ansaugen von Falschluft vermieden. Über die unbearbeitete Teillänge des Hohlprofils stellt sich nämlich ein starker Luftsog ein, unter dessen Wirkung die beispielsweise beim Laserschneiden anfallenden Schneidgase aus dem Bereich des Bearbeitungskopfs der Bearbeitungsmaschine zumindest nahezu restlos abgezogen werden können.

Zur weiteren Automatisierung der Werkstückbearbeitung ist an einer vorteilhaften Ausführungsform der erfindungsgemäßen Bearbeitungsmaschine wenigstens eine gesteuert angetriebene Übernahmevorrichtung zum Übernehmen der bearbeiteten Werkstücke von den Drehvorrichtungen und/oder wenigstens eine gesteuert angetriebene Übergabevorrichtung zum Übergeben der zu bearbeitenden Werkstücke an die Drehvorrichtungen vorgesehen. Der Übergabevorrichtung kann dabei ein gesteuert betriebener Zuförderer vorgeschaltet werden, der der Übergabevorrichtung die zu bearbeitenden Werkstücke nacheinander zuführt. Sobald ein Werkstück bearbeitet ist, werden die Drehvorrichtungen in Öffnungsstellung geschaltet und das bearbeitete Werkstück läßt sich mittels der Übernahmevorrichtung aus der Maschine entnehmen. Mittels der Übergabevorrichtung wird das nächste, noch unbearbeitete Werkstück gegebenenfalls von dem Zuförderer übernommen und in die Drehvorrichtungen eingelegt bzw. mit diesen fluchtend ausgerichtet. Anschließend werden die Drehvorrichtungen verfahren, bis ihre Einspannhalterungen das betreffende Werkstück einschließen und schließlich in Einspannstellung festlegen. Das Werkstück kann dann in der vorstehend beschriebenen Art und Weise bearbeitet werden.

Die Erfindung wird nachfolgend anhand schematischer Darstellungen eines Ausführungsbeispiels näher erläutert. Es zeigen:

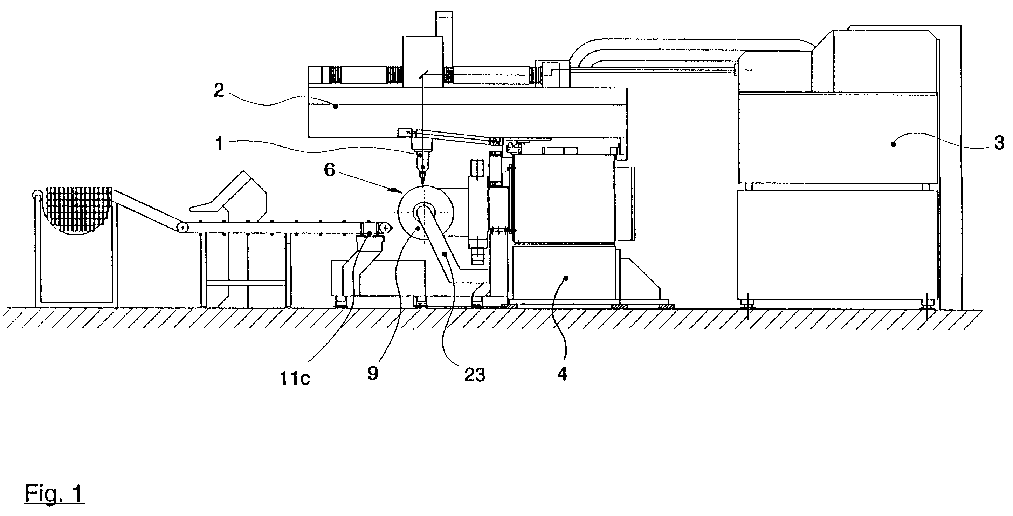

- Figur 1: eine Laserschneidmaschine mit verschiebbaren Drehvorrichtungen für Profilstäbe in der Seitenansicht,
- Figur 2: die Laserschneidmaschine nach Figur 1 in der Draufsicht und
- Figur 3: die Laserschneidmaschine nach den Figuren 1 und 2 in der geschnittenen Seitenansicht.

Die dargestellte Laserschneidmaschine besitzt als Bearbeitungskopf einen Laserschneidkopf 1, der an einer Brücke 2 in Richtung der drei Koordinaten des Raumes beweglich gelagert ist und der mit einem stationären Lasergenerator 3 in Verbindung steht. Die Brücke 2 ist an einem Maschinengrundrahmen 4 in Längsrichtung eines Werkstücks in Form eines Profilstabes 5 verfahrbar gehalten. Ebenfalls in Längsrichtung des Profilstabes 5 sind entlang des Maschinengrundrahmens 4 Drehvorrichtungen 6, 7, 8 angeordnet. Dabei besteht die mittlere Drehvorrichtung 7 aus zwei stationären Drehteilvorrichtungen 7a, 7b. Die Drehvorrichtungen 6, 8 sind an dem Maschinengrundrahmen 4 angetrieben verfahrbar geführt.

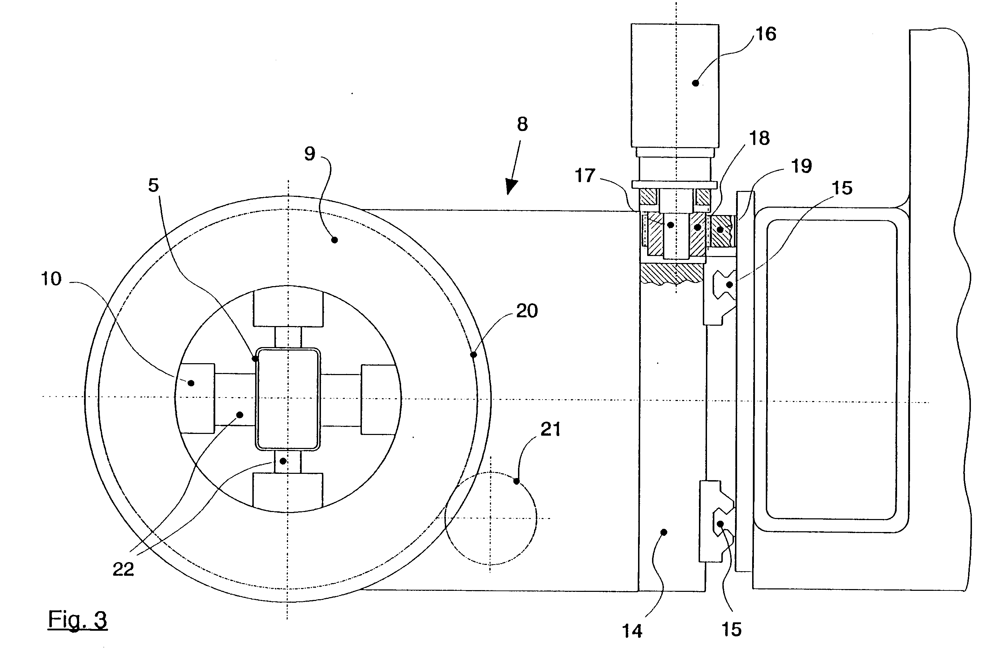

Die Drehvorrichtungen 6, 7, 8 bzw. die Drehteilvorrichtungen 7a, 7b umfassen jeweils einen Rundschalttisch 9 sowie jeweils eine, in dessen Innern angeordnete und in Figur 3 angedeutete Einspannhalterung 10 für Profilstäbe 5. Die Einspannhalterung 10 ist im Innern des Rundschalttischs 9 um die Werkstücklängsachse angetrieben drehbar.

Eine Übergabevorrichtung 11 mit drei Übergabeelementen 11a, 11b, 11c ist zwischen dem Maschinengrundrahmen 4 und einem Ablagetisch 12 mit umlaufenden Endlosförderbändern 13 für Profilstäbe 5 angeordnet.

Wie aus Figur 3 hervorgeht, sind die verschiebbaren Drehvorrichtungen 6, 8 an einem Tragschlitten 14 angebracht. Dieser wird mittels einer oberen sowie mittels einer unteren schwalbenschwanzartigen Führung 15 in Längsrichtung des Maschinengrundrahmens 4 an letzterem geführt. Der Verfahrantrieb für die Drehvorrichtungen 6, 8 umfaßt einen Elektromotor 16 mit einer Motorwelle 17, auf welcher ein Antriebsritzel 18 aufsitzt. Das Antriebsritzel 18 kämmt mit einer in Längsrichtung des Maschinengrundrahmens 4 verlaufenden und mit diesem fest verbundenen Zahnstange 19.

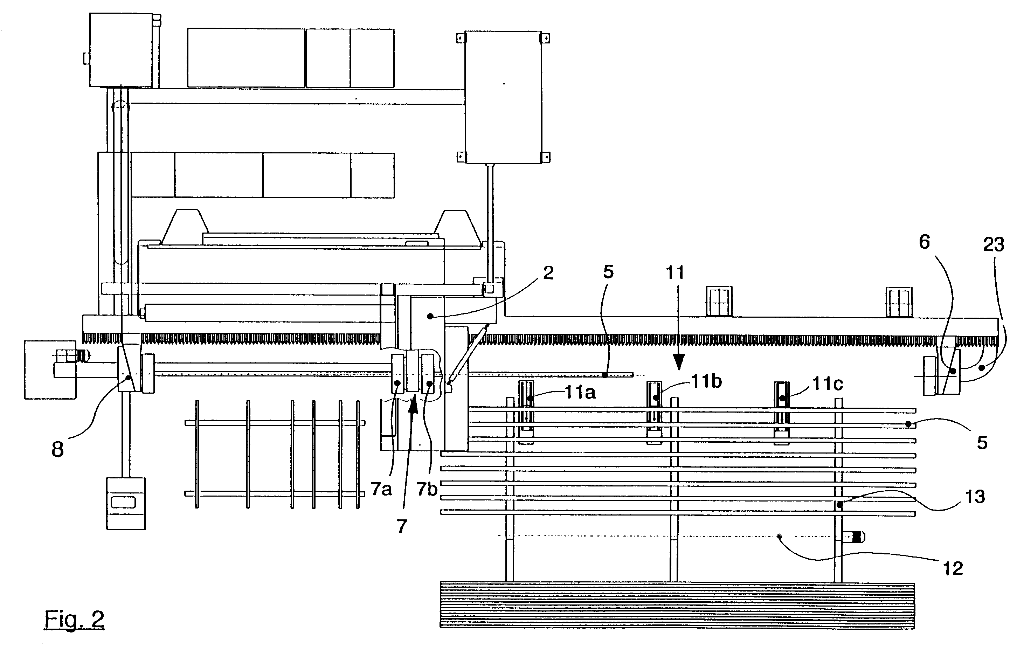

Zur Vorbereitung der Werkstückbearbeitung wird zunächst einer der auf dem Ablagetisch 12 abgelegten Profilstäbe 5 mittels der Endlosförderbänder 13 an die den Übergabeelementen 11a, 11b, 11c der Übergabevorrichtung 11 zugewandte Kante des Ablagetischs 12 verbracht, von wo aus der Profilstab 5 in eine Aufnahme an den unterhalb der Kante des Ablagetisches 12 angeordneten Übergabeelemente 11a, 11b, 11c gleicht. Anschließend verfahren die Übergabeelemente 11a, 11b, 11c in Richtung des Maschinengrundrahmens 4, bis der Profilstab 5 maschinenseitig zwischen den Drehvorrichtungen 6, 7 zu liegen kommt. Nach Anheben der Aufnahmen an den Übergabeelementen 11a, 11b, 11c ist der Profilstab 5 derart ausgerichtet, daß er mit dem Zentrum der Einspannhalterungen 10 an den Drehvorrichtungen 6, 7 fluchtet. Nunmehr wird die Drehvorrichtung 6 in Figur 2 nach links verfahren. Dabei läuft der zu bearbeitende Profilstab 5 an seinem der Drehvorrichtung 6 zugewandten Ende in deren Einspannhalterung 10 ein. Die Einspannhalterung 10 wird nunmehr in Einspannstellung geschaltet, in der sie den Profilstab 5 klemmend festlegt. Anschließend wird die Drehvorrichtung 6 mit dem daran festgelegten Profilstab 5 in Richtung der stationären und in Öffnungsstellung geschalteten Drehvorrichtung 7 verfahren. Dabei schiebt die Drehvorrichtung 6 den Profilstab 5 in die Drehteilvorrichtungen 7a, 7b ein, deren Einspannhalterungen nunmehr ebenfalls in Einspannstellung betätigt werden. In dieser Stellung ist der Profilstab 5 beidendig eingespannt und abgestützt.

Nunmehr wird der Laserschneidkopf 1 entsprechend den gewünschten Bearbeitungsmaßnahmen an dem Profilstab 5 entlanggeführt. Sofern der Profilstab 5 in Umfangsrichtung an verschiedenen Bereichen seines Mantels bearbeitet werden muß, werden die Einspannhalterungen 10 an den Drehvorrichtungen 6, 7 über entsprechende Antriebseinrichtungen in Drehung versetzt. Im Falle der dargestellten Laserschneidmaschine ist zu diesem Zweck an den Rundschalttischen 9 ein Zahnkranz 20 vorgesehen, mit dem ein Antriebsrad 21 kämmt.

Nachdem die Bearbeitung des Profilstabs 5 beendet ist, öffnet die Einspannhalterung 10 der Drehvorrichtung 7 und die Drehvorrichtung 6 verfährt gemeinsam mit dem eingespannten Profilstab 5 in Richtung der Drehvorrichtung 7 bis der Profilstab 7 mit seinem in Verschieberichtung vorderen Ende die Drehteilvorrichtung 7a überragt. Nun verfährt die Drehvorrichtung 8, deren Einspannhalterung 10 in Öffnungsstellung geschaltet ist, in Figur 2 nach rechts, bis sie mit ihrer geöffneten Einspannhalterung 10 das über die Drehteilvorrichtung 7a vorstehende Ende des Profilstabs 5 umfaßt. Durch Schließen der Einspannhalterung 10 der Drehvorrichtung 8 wird der Profilstab 5 an letzterer festgelegt. Nachdem die Einspannhalterung 10 der Drehvorrichtung 6 in Öffnungsstellung geschaltet ist, kann die Drehvorrichtung 8 mit dem daran festgelegten Profilstab 5 in ihre in Figur 2 dargestellte Ausgangsstellung zurückverfahren. Dabei zieht sie den bearbeiteten Profilstab 5 aus der Drehvorrichtung 7 ab. Anschließend wird die Einspannhalterung 10 der Drehvorrichtung 8 in Öffnungsstellung geschaltet und der bearbeitete Profilstab 5 kann mittels einer in Figur 2 nicht dargestellten Übernahmevorrichtung aufgenommen und aus dem unmittelbaren Nahbereich der Maschine entfernt werden.

## Patentansprüche

1. Bearbeitungsmaschine, insbesondere Laserbearbeitungsmaschine, zum Bearbeiten von länglichen Werkstücken (5), vorzugsweise von Profilstäben, mit einem Bearbeitungskopf (1) sowie mit einer gesteuert betätigbaren Drehvorrichtung (6, 7, 8) für das Werkstück (5), welche wenigstens eine um die Längsachse des Werkstücks (5) gesteuert angetrieben drehbare Einspannhalterung (10) für das Werkstück (5) aufweist, dadurch gekennzeichnet, daß wenigstens eine weitere gesteuert betätigbare Drehvorrichtung (6, 7, 8) für das Werkstück (5) vorgesehen ist und daß die Einspannhalterungen (10) der Drehvorrichtungen (6, 7, 8) unabhängig voneinander betätigbar und die Drehvorrichtungen (6, 7, 8) in Längsrichtung des Werkstücks (5) relativ zueinander angetrieben verschiebbar sind.

2. Bearbeitungsmaschine nach Anspruch 1 mit einer in Längsrichtung des Werkstücks (5) ortsfesten Drehvorrichtung (7), dadurch gekennzeichnet, daß zwei in Längsrichtung des Werkstücks (5) der ortsfesten Drehvorrichtung (7) beidseits benachbarte und in Längsrichtung des Werkstücks (5) verschiebbare Drehvorrichtungen (6, 8) vorgesehen sind.

3. Bearbeitungsmaschine nach Anspruch 1 oder 2, dadurch gekennzeichnet, daß die verschiebbare(n) Drehvorrichtung(en) (6, 8) an jeweils einem mittels eines Zahnstangenantriebs in Längsrichtung des Werkstücks (5) geführt verfahrbaren Tragschlitten (14) gehalten ist (sind).

4. Bearbeitungsmaschine nach einem der Ansprüche 1 bis 3, dadurch gekennzeichnet, daß die Einspannhalterungen (10) der verschiedenen Drehvorrichtungen (6, 7, 8) wahlweise synchronisiert oder unsynchronisiert drehbar sind.

5. Bearbeitungsmaschine nach einem der Ansprüche 1 bis 4, dadurch gekennzeichnet, daß die Einspannhalterungen (10) jeweils wenigstens zwei, insbesondere jeweils vier, einander vorzugsweise paarweise gegenüberliegende und gegeneinander relativverschiebbare Spannbacken (22) aufweisen.

6. Bearbeitungsmaschine nach Anspruch 5, dadurch gekennzeichnet, daß die einander zugeordneten Spannbacken synchronisiert verschiebbar sind und daß die Verschiebung der Spannbacken (22) zum zentrischen Einspannen des Werkstücks (5) kraftabhängig gesteuert ist.

7. Bearbeitungsmaschine nach einem der Ansprüche 1 bis 6, dadurch gekennzeichnet, daß an wenigstens einer Drehvorrichtung (6, 7, 8), vorzugsweise gegebenenfalls an der ortsfesten Drehvorrichtung (7), wenigstens zwei in Längsrichtung des Werkstückes (5) einander benachbarte, gesteuert betätigbare Einspannhalterungen (10) für das Werkstück (5) vorgesehen sind.

8. Bearbeitungsmaschine nach einem der Ansprüche 1 bis 7 zur Bearbeitung insbesondere von hohlprofilierten Werkstücken (5) mit einer Absaugvorrichtung (23), dadurch gekennzeichnet, daß an dem dem bearbeitungsseitigen Ende abgewandten unbearbeiteten Ende des Werkstückes eine verschiebbare Drehvorrichtung mit der mit dieser verschiebbaren und das unbearbeitete Ende des Werkstücks absaugenden Absaugvorrichtung (23) vorgesehen ist.

9. Bearbeitungsmaschine nach einem der Ansprüche 1 bis 8, dadurch gekennzeichnet, daß wenigstens eine gesteuert angetriebene Übernahmevorrichtung zum Übernehmen der bearbeiteten Werkstücke (5) von den Drehvorrichtungen (7, 8) und/oder wenigstens eine gesteuert angetriebene Übergabevorrichtung (11) zum Übergeben der zu bearbeitenden Werkstücke (5) an die Drehvorrichtungen (6, 7) vorgesehen ist.

## Claims

1. Work machine, in particular a laser work machine, for machining elongate workpieces (5), preferably profiled bars, with a machining head (1) and with a rotating device (6, 7, 8) for the workpiece (5), which rotating device (6, 7, 8) can be actuated in controlled manner and comprises at least one clamping mounting (10) for the workpiece (5), the clamping mounting (10) being rotatable about the longitudinal axis of the workpiece (5) and driven in controlled manner, characterized in that at least one further rotating device (6, 7, 8) which can he actuated in controlled manner is provided for the workpiece (5); and in that the clamping mountings (10) of the rotating devices (6, 7, 8) can be actuated independently of one another, and the rotating devices (6, 7, 8) can be displaced relative to one another in driven manner in the longitudinal direction of the workpiece (5).

2. Work machine according to Claim 1 with a rotating device (7) which is stationary in the longitudinal direction of the workpiece (5), characterized in that there are provided two rotating devices (6, 8) which are adjacent either side of the stationary rotating device (7) in the longitudinal direction of the workpiece (5) and are displaceable in the longitudinal direction of the workpiece (5).

3. Work machine according to Claim 1 or Claim 2, characterized in that the displaceable rotating device(s) (6, 8) is(are) mounted in each case on a carrier slide (14) which can be moved in guided manner by means of a toothed rack drive in the longitudinal direction of the workpiece (5).

4. Work machine according to any one of Claims 1 to 3, characterized in that the clamping mountings (10) of the various rotating devices (6, 7, 8) can be rotated in an alternatively synchronized or unsynchronized manner.

5. Work machine according to any one of Claims 1 to 4, characterized in that the clamping mountings (10) each comprise at least two, in particular four, clamping jaws (22) which preferably face one another in pairs and can be moved in relative manner towards one another.

6. Work machine according to Claim 5, characterized in that the mutually associated clamping jaws can be displaced in synchronized manner; and in that the displacement of the clamping jaws (22) is controlled in force-dependent manner in order to clamp the workpiece (5) centrally.

7. Work machine according to any one of Claims 1 to 6, characterized in that at least two clamping mountings (10) for the workpiece (5), which are adjacent each other in the longitudinal direction of the workpiece (5) and can be actuated in controlled manner, are provided on at least one rotating device (6, 7, 8), preferably optionally on the stationary rotating device (7).

8. Work machine according to any one of Claims 1 to 7 for machining in particular hollow profiled workpieces (5) with a suction device (23), characterized in that at the unmachined workpiece end remote from the machining-side end, a displaceable rotating device is provided with the suction device (23) which can be displaced therewith and applies suction to the unmachined workpiece end.

9. Work machine according to any one of Claims 1 to 8, characterized in that there are provided at least one take-over device which is driven in controlled manner for taking over the machined workpieces (5) from the rotating devices (7, 8) and/or at least one transfer device (11) which is driven in controlled manner for transferring to the rotating devices (6, 7) the workpieces (5) to be machined.

## Revendications

1. Machine d'usinage, notamment machine d'usinage au laser, pour l'usinage de pièces oblongues (5), de préférence de barres profilées, avec une tête d'usinage (1) et avec un dispositif de rotation (6, 7, 8) pour la pièce (5), qui peut être actionné de façon commandée et qui présente au moins un support de serrage (10) pour la pièce (5) qui peut être tourné autour de l'axe longitudinal de la pièce (5) en étant entraîné de façon commandée, **caractérisée** en ce qu'au moins un dispositif de rotation supplémentaire (6, 7, 8), pouvant être actionné de façon commandée, est prévu pour la pièce (5), et en ce que les supports de serrage (10) des dispositifs de rotation (6, 7, 8) peuvent être actionnés indépendamment les uns des autres, et les dispositifs de rotation (6, 7, 8) peuvent coulisser les uns par rapport aux autres, en étant entraînés, dans la direction longitudinale de la pièce (5).

2. Machine d'usinage selon la revendication 1, avec un dispositif de rotation (7) stationnaire dans la direction longitudinale de la pièce (5), **caractérisée** en ce qu'il est prévu deux dispositifs de rotation (6, 8) pouvant coulisser dans la direction longitudinale de la pièce (5), qui sont voisins de part et d'autre du dispositif de rotation stationnaire (7) dans la direction longitudinale de la pièce (5).

3. Machine d'usinage selon la revendication 1 ou 2, **caractérisée** en ce que le ou les dispositifs de rotation (6, 8) pouvant coulisser sont respectivement maintenus sur un chariot porteur (14) guidé en translation dans la direction longitudinale de la pièce (5) au moyen d'un entraînement à crémaillère.

4. Machine d'usinage selon une des revendications 1 à 3, **caractérisée** en ce qu'on peut faire tourner les supports de serrage (10) des différents dispositifs de rotation (6, 7, 8) de façon synchronisée ou non synchronisée, au choix.

5. Machine d'usinage selon une des revendications 1 à 4 **caractérisée** en ce que les supports de serrage (10) présentent chacun au moins deux, et notamment chacun quatre, mors de serrage (22) à coulissement relatif mutuel et mutuellement opposés, de préférence par paires.

6. Machine d'usinage selon la revendication 5, **caractérisée** en ce que les mors de serrage mutuellement associés peuvent coulisser de façon synchronisée, et en ce que le coulissement des mors de serrage (22) est commandé en fonction de la force exercée, en vue du serrage centré de la pièce (5).

7. Machine d'usinage selon une des revendications 1 à 6 **caractérisée** en ce qu'au moins deux supports de serrage (10) pour la pièce (5), pouvant être actionnés de façon commandée et mutuellement voisins dans la direction longitudinale de la pièce (5), sont prévus sur au moins un dispositif de rotation (6, 7, 8), de préférence le cas échéant sur le dispositif de rotation stationnaire (7).

8. Machine d'usinage selon une des revendications 1 à 7, pour usiner notamment des pièces profilées creuses (5) avec un dispositif d'aspiration (23), **caractérisée** en ce qu'un dispositif de rotation coulissant est prévu à l'extrémité non usinée de la pièce qui est opposée à l'extrémité côté usinage, et il est pourvu du dispositif d'aspiration (23), qui est coulissant avec ce dispositif de rotation et qui aspire par l'extrémité non usinée de la pièce.

9. Machine d'usinage selon une des revendications 1 à 8, **caractérisée** en ce qu'au moins un dispositif de prise en charge pouvant être entraîné de façon commandée est prévu pour prendre en charge les pièces usinées (5) des dispositifs de rotation (7, 8), et/ou au moins un dispositif de remise (11), pouvant être entraîné de façon commandée, est prévu pour remettre les pièces à usiner (5) aux dispositifs de rotation (6, 7).
